# EUROPÄISCHE PATENTSCHRIFT

(11) **EP 1 137 700 B1**
(45) Veröffentlichungstag und Bekanntmachung des Hinweises auf die Patenterteilung: **01.10.2003**
(21) Anmeldenummer: 99968341.0
(22) Anmeldetag: 07.12.1999
(51) Int. Cl.: C08J 9/00, C08J 9/16, C08L 25/04

(54) **VERFAHREN ZUR HERSTELLUNG VON EXPANDIERBAREN POLYSTYROLTEILCHEN**
METHOD FOR PRODUCING EXPANDABLE POLYSTYRENE PARTICLES
PROCEDE DE FABRICATION DE PARTICULES DE POLYSTYRENE EXPANSIBLES

(30) Priorität: 09.12.1998 DE 19856758
(43) Veröffentlichungstag der Anmeldung: 04.10.2001
(73) Patentinhaber: BASF AKTIENGESELLSCHAFT, 67056 Ludwigshafen (DE)
(72) Erfinder: GLÜCK, Guiscard, D-55129 Mainz (DE); DIETZEN, Franz-Josef, D-67071 Ludwigshafen (DE); HAHN, Klaus, D-67281 Kirchheim (DE); EHRMANN, Gerd, D-67146 Deidesheim (DE)
(86) Internationale Anmeldenummer: EP9909553
(87) Internationale Veröffentlichungsnummer: WO00034342

(56) Entgegenhaltungen:
- EP-A- 0 729 999
- DE-A- 19 843 327
- PATENT ABSTRACTS OF JAPAN vol. 015, no. 409 (C-0876), 18. Oktober 1991 (1991-10-18) & JP 03 167236 A (NIPPON KASEI KK), 19. Juli 1991 (1991-07-19) in der Anmeldung erwähnt

## Beschreibung

Die Erfindung betrifft teilchenförmige expandierbare Styrolpolymerisate, die mit halogenfreien Flammschutzmitteln ausgerüstet sind.

Polystyrol-Partikelschaumstoffe werden in großem Maß zum Isolieren von Gebäuden und Gebäudeteilen eingesetzt. Für diesen Zweck müssen sie flammfest ausgerüstet sein. Die zur Flammfestmachung von Polystyrolschaumstoffen üblicherweise verwendeten Flammschutzmittel enthalten Halogene. Aus Umweltschutzgründen soll der Einsatz von Halogenen in Schaumstoffen verringert werden.

Der Erfindung lag daher die Aufgabe zugrunde, expandierbare Polystyrolteilchen bereitzustellen, die zu Schaumstoffen der Brandklassen B 1 und B 2 verarbeitbar sind und unter Verzicht auf halogenhaltige Flammschutzmittel hergestellt wurden.

Diese Aufgabe wurde gelöst durch ein Verfahren zur Herstellung teilchenförmiger expandierbarer Styrolpolymerisate durch Polymerisation von Styrol, gegebenenfalls zusammen mit Comonomeren, in wäßriger Suspension unter Zusatz von Treibmitteln vor, während oder nach der Polymerisation, wobei die Polymerisation in Gegenwart von-5 bis 50 Gew.-%, bezogen auf die Monomeren, Blähgraphit durchgeführt wird.

Ein weiterer Gegenstand der Erfindung sind teilchenförmige, expandierbare Styrolpolymerisate, die 5 bis 50 Gew.-%, bezogen auf das Styrolpolymerisat, Blähgraphit mit einer mittleren Teilchengröße von 20 bis 100 µm, vorzugsweise von 30 bis 80 µm, in homogener Verteilung enthalten.

In der Literatur wird Blähgraphit in Kombination mit rotem Phosphor bzw. phosphorhaltigen Verbindungen als Flammschutzmittel für kompaktes Polystyrol beschrieben. Bei früheren Versuchen ist aber festgestellt worden, daß halogenfreie Flammschutzmittel, die bei kompaktem Polystyrol einsetzbar sind, nicht bei der Schaumherstellung verwendbar sind, da entweder der Schäumprozeß stark gestört oder die Wärmeformbeständigkeit des Schaumstoffs zu weit abgesenkt wird. Dies ist jedoch überraschenderweise bei der vorliegenden Erfindung nicht der Fall.

Die US-A 3,574,644 beschreibt den Zusatz von Blähgraphit als Flammschutzmittel für brennbare Materialien, u.a. für Schaumstoffe, in denen der Blähgraphit in Mengen von 20 bis 40 Gew.-% enthalten sein soll. Der Blähgraphit kann entweder vor der Expansion in das expandierbare Material eingearbeitet werden, oder dieses kann nach der Expansion mit dem Blähgraphit beschichtet werden. Die Herstellung von expandierbaren Polystyrolpartikeln durch Polymerisation von Styrol in Gegenwart von Blähgraphit ist nicht beschrieben.

Die JP-A 03-167 236 beschreibt einen Polystyrol-Schaum, der als Flammschutzmittel Blähgraphit enthält, dessen Oberfläche mit einem filmbildenden Harz vollständig beschichtet wurde. Diese Beschichtung wird als notwendig bezeichnet, um Korrosion von Verarbeitungsmaschinen durch im Blähgraphit stets enthaltene Säuren zu vermeiden; sie erfordert aber einen zusätzlichen, aufwendigen Arbeitsschritt. Neben dem Blähgraphit kann der Polystyrol-Schaum noch übliche Flammschutzmittel, wie z.B. halogenierte organische Phosphate, enthalten. Der Polystyrol-Schaum wird vorzugsweise durch Vermischen von Polystyrol-Schaumpartikeln mit einem Haftvermittler und dem beschichteten Blähgraphit hergestellt. Die Partikelgröße des Blähgraphits soll vorzugsweise zwischen 30 und 120 mesh liegen, was einem Durchmesser von etwa 120 bis 540 µm entspricht. Bei Partikelgrößen von weniger als 150 mesh (104 µm) ist die Flammschutzwirkung des Blähgraphits angeblich stark verringert.

Aufgrund seiner Schichtgitterstruktur ist Graphit in der Lage, spezielle Formen von Einlagerungsverbindungen zu bilden. In diesen sogenannten Zwischengitterverbindungen sind Fremdatome oder -moleküle in z.T. stöchiometrischen Verhältnissen in die Räume zwischen den Kohlenstoffatomen aufgenommen worden. Diese Graphitverbindungen, z.B. mit Schwefelsäure als Fremdmolekül, die auch in technischem Maßstab hergestellt werden, werden als Blähgraphit bezeichnet. Die Dichte dieses Blähgraphits liegt im Bereich von 1,5 bis 2,1 g/cm³, die mittlere Teilchengröße im allgemeinen bei 20 bis 2000 µm, im vorliegenden Fall vorzugsweise bei 20 bis 100 µm und insbesondere bei 30 bis 80 µm.

Als Phosphorverbindungen können anorganische oder organische Phosphate, Phosphite oder Phosphonate sowie roter Phosphor eingesetzt werden. Bevorzugte Phosphorverbindungen sind beispielsweise Diphenylphosphat, Triphenylphosphat, Diphenylkresylphosphat, Ammoniumpolyphosphat, Resorcinoldiphenylphosphat, Melaminphosphat, Phenylphosphonsäuredimethylester oder Dimethylmethylphosphonat.

Bei der erfindungsgemäßen Suspensionspolymerisation wird als Monomer bevorzugt Styrol allein eingesetzt. Es kann jedoch zu bis zu 20 % seines Gewichts durch andere ethylenisch ungesättigte Monomere, wie Alkylstyrole, Divinylbenzol, Acrylnitril, 1,1-Diphenylether oder α-Methylstyrol ersetzt sein.

Bei der Suspensionspolymerisation können die üblichen Hilfsmittel, wie z.B. Peroxidinitiatoren, Suspensionsstabilisatoren, Treibmittel, Kettenüberträger, Expandierhilfsmittel, Keimbildner und Weichmacher zugesetzt werden. Der Blähgraphit wird bei der Polymerisation in Mengen von 5 bis 50 Gew.-%, vorzugsweise von 8 bis 30 Gew.-%, zugesetzt, die Phosphorverbindung in Mengen von 2 bis 20 Gew.-%, vorzugsweise von 3 bis 10 Gew.-%. Treibmittel werden in Mengen von 3 bis 10 Gew.-%, bezogen auf Monomer zugesetzt. Man kann sie vor, während oder nach der Polymerisation der Suspension zusetzen. Geeignete Treibmittel sind aliphatische Kohlenwasserstoffe mit 4 bis 6 Kohlenstoffatomen. Es ist vorteilhaft, als Suspensionsstabilisatoren anorganische Pickering-Dispergatoren, z.B. Magnesiumpyrophosphat oder Calciumphosphat einzusetzen. Es hat sich gezeigt, daß bei Einsatz von Blähgraphit geringer Teilchengröße, d.h. mit mittlerem Durchmesser von 20 bis 100 µm, vorzugsweise von 30 bis 80 µm, die Stabilität der Suspension im Vergleich zu gröberen Blähgraphitpartikeln verbessert wird, und daß Teilchen mit niedrigerem Innenwassergehalt entstehen.

Bei der Suspensionspolymerisation entstehen perlförmige, im wesentlichen runde Teilchen mit einem mittleren Durchmesser im Bereich von 0,2 bis 2 mm. Sie können mit den üblichen Beschichtungsmitteln, z.B. Metallstearaten, Glycerinestern und feinteiligen Silicaten beschichtet werden.

Außer durch Suspensionspolymerisation nach Anspruch 1 können die expandierbaren Polystyrolteilchen nach Anspruch 7 auch durch Vermischen von Styrolpolymerisatschmelze und Treibmittel mit Blähgraphit einer mittleren Teilchengröße von 20 bis 100 µm, sowie gegebenenfalls der Phosphorverbindung, Extrudieren, Abkühlen und Granulieren hergestellt werden. Auch ein nachträgliches Imprägnieren von Blähgraphit enthaltendem Styrolpolymerisat-Granulat ist möglich.

Die expandierbaren Polystyrolteilchen können zu Polystyrolschaumstoffen mit Dichten von 5 bis 100 g/l bevorzugt von 10 bis 50 g/l, verarbeitet werden. Hierzu werden die expandierbaren Partikel vorgeschäumt. Dies-geschieht zumeist durch Erwärmen der Partikel mit Wasserdampf in sogenannten Vorschäumern. Die so vorgeschäumten Partikel werden danach zu Formkörpern verschweißt.

Hierzu werden die vorgeschäumten Partikel in nicht gasdicht schließende Formen gebracht und mit Wasserdampf beaufschlagt. Nach Abkühlen können die Formteile entnommen werden.

### Beispiel 1

In 18,0 kg Styrol werden 61,0 g Dicumylperoxid und 20,2 g Dibenzolperoxid gelöst, sowie 900 g Phenylphosphonsäuredimethylester zugesetzt (5 Gew.-% bezogen auf Styrol). Die organische Phase wird in 20,2 l vollentsalztes Wasser in einen 50-l-Rührkessel eingebracht. Die wäßrige Phase enthält 35,0 g Natriumpyrophosphat und 70,0 g Magnesiumsulfat (Bittersalz). Man erhitzt die Suspension schnell auf 90°C und anschließend binnen 4 Stunden auf 130°C. 1 Stunde nach Erreichen von 90°C werden 1,8 g Emulgator K 30 (Bayer AG) zudosiert. Nach einer weiteren Stunde werden 2,7 kg Blähgraphit (UCAR, Grafguard 160-80, mittlere Teilchengröße 100 µm) suspendiert in 2,0 kg Styrol zur Reaktionsmischung dazugegeben. Nach weiteren 30 Minuten werden 1,6 kg Pentan nachdosiert. Schließlich wird bei der Endtemperatur von 130°C auspolymerisiert. Die erhaltenen treibmittelhaltigen Polystyrolperlen werden abdekantiert, gewaschen und von Innenwasser getrocknet. Sie werden nach üblichem Verfahren zu Schaumpartikeln aufgeschäumt und anschließend zu Schaumstoffblöcken oder Formteilen versintert.

Die so erhaltenen Schaumstoffblöcke oder Formteile erfüllen die Anforderungen nach den Brandklassen B 1 und B 2.

### Beispiel 2

In 14,4 kg Styrol werden 3,6 kg Polystyrol (VPT, BASF Aktiengesellschaft), 61,0 g Dicumylperoxid und 20,2 g tert.-Butylperoxy-2-ethylhexanoat gelöst, sowie 900 g Phenylphosphonsäuredimethylester zugesetzt (5 Gew.-% bezogen auf Styrol und Polystyrol). Anschließend werden 2,7 kg eines Blähgraphits mit einer mittleren Teilchengröße von 45 µm unter Rühren suspendiert. Die organische Phase wird in 20,2 l vollentsalztes Wasser in einen 50-l-Rührkessel eingebracht. Die wäßrige Phase enthält 35,0 g Natriumpyrophosphat und 70,0 g Magnesiumsulfat (Bittersalz). Man erhitzt die Suspension schnell auf 90°C und anschließend binnen 4 Stunden auf 130°C 60'Minuten nach Erreichen von 90°C werden 1,8 g Emulgator K 30 (Bayer AG) zudosiert. Nach weiteren 90 Minuten werden 1,6 kg Pentan nachdosiert. Schließlich wird bei der Endtemperatur von 130°C auspolymerisiert. Die erhaltenen treibmittelhaltigen Polystyrolperlen werden abdekantiert, gewaschen und von Innenwasser getrocknet. Sie werden nach üblichem Verfahren zu Schaumpartikeln aufgeschäumt und anschließend zu Schaumstoffblöcken oder Formteilen versintert.

Die so erhaltenen Schaumstoffblöcke oder Formteile erfüllen die Anforderungen nach den Brandklassen B 1 und B 2.

### Beispiel 3

Eine Mischung aus Polystyrol sowie 15 Gew.-% Blähgraphit (mittlere Teilchengröße 45 µm) und 5 Gew.-% roter Phosphor wurden einem Extruder mit einem inneren Schneckendurchmesser von 53 mm kontinuierlich zugeführt und aufgeschmolzen. Durch eine in dem Extruder angebrachte Einlaßöffnung wurden 6 Gew.-% Pentan als Treibmittel kontinuierlich in den Extruder eingedrückt und in die Schmelze eingemischt. Die Schmelze wurde über einen unter Druck betriebenen Unterwassergranulator, der an der Düsenplatte des Extruders angebracht war, zu perlförmigen Partikeln granuliert.

Durch zweimaliges Aufschäumen mit Wasserdampf wurden Schaumstoffperlen der Schüttdichte 15 g/l erhalten. Diese Schaumstoffpartikel und ein daraus hergestelltes Schaumstoffformteil bestanden die Anforderungen der Brandklassen B 1 und B 2 nach DIN 4102.

## Patentansprüche

1. Verfahren zur Herstellung teilchenförmiger expandierbarer Styrolpolymerisate durch Polymerisation von Styrol, gegebenenfalls zusammen mit Comonomeren, in wäßriger Suspension unter Zusatz von Treibmitteln vor, während oder nach der Polymerisation, **dadurch gekennzeichnet, daß** die Polymerisation in Gegenwart von 5 bis 50 Gew.-%, bezogen auf die Monomeren, Blähgraphit durchgeführt wird.

2. Verfahren nach Anspruch 1, **dadurch gekennzeichnet, daß** bei der Polymerisation zusätzlich 2 bis 20 Gew.-%, bezogen auf die Monomeren, einer Phosphorverbindung zugegen sind.

3. Verfahren nach Anspruch 2, **dadurch gekennzeichnet, daß** die Phosphorverbindung roter Phosphor, ein organisches oder anorganisches Phosphat, Phosphit oder Phosphonat ist.

4. Verfahren nach Anspruch 2, **dadurch gekennzeichnet, daß** die Phosphorverbindung Triphenylphosphat, Diphenylkresylphosphat, Ammoniumpolyphosphat, Melaminphosphat, Phenylphosphonsäuredimethylester oder Diphenylphosphat ist.

5. Verfahren nach Anspruch 1, **dadurch gekennzeichnet, daß** der Blähgraphit eine Dichte von 1,5 bis 2,1 g/cm³ und eine mittlere Teilchengröße (längster Durchmesser) von 20 bis 2000 µm aufweist.

6. Verfahren nach Anspruch 5, **dadurch gekennzeichnet, daß** die mittlere Teilchengröße 20 bis 100 µm beträgt.

7. Teilchenförmige, expandierbare Styrolpolymerisate, die 5 bis 50 Gew.-%, bezogen auf das Styrolpolymerisat, Blähgraphit als Flammschutzmittel in homogener Verteilung enthalten, **dadurch gekennzeichnet, daß** der Blähgraphit eine mittlere Teilchengröße von 20 bis 100 µm aufweist.

8. Teilchenförmige, expandierbare Styrolpolymerisate nach Anspruch 7, **dadurch gekennzeichnet, daß** sie zusätzlich 2 bis 20 Gew.-%, bezogen auf das Styrolpolymerisat, einer Phosphorverbindung enthalten.

9. Verwendung der expandierbaren Polystyrolteilchen nach Anspruch 1 oder 7 zur Herstellung von Polystyrol-Partikelschaumstoffen, die den Anforderungen der Brandklassen B 1 und B 2 genügen.

## Claims

1. A process for preparing particulate expandable styrene polymers by polymerizing styrene, where appropriate together with comonomers, in aqueous suspension with use of blowing agents prior to, during, or after the polymerization, which comprises carrying out the polymerization in the presence of from 5 to 50% by weight, based on the monomers, of expanded graphite.

2. A process as claimed in claim 1, wherein from 2 to 20% by weight, based on the monomers, of a phosphorus compound are also present during the polymerization.

3. A process as claimed in claim 2, wherein the phosphorus compound is red phosphorus, or an organic or inorganic phosphate, phosphite or phosphonate.

4. A process as claimed in claim 2, wherein the phosphorus compound is triphenyl phosphate, diphenyl cresyl phosphate, ammonium polyphosphate, melamine phosphate, dimethyl phenylphosphonate, or diphenyl phosphate.

5. A process as claimed in claim 1, wherein the expanded graphite has a density of from 1.5 to 2.1 g/cm³ and an average particle size (longest diameter) of from 20 to 2000 µm.

6. A process as claimed in claim 5, wherein the average particle size is from 20 to 100 µm.

7. A particulate, expandable styrene polymer which comprises from 5 to 50% by weight, based on the styrene polymer, of expanded graphite as uniformly distributed flame retardant, wherein the expanded graphite has an average particle size of from 20 to 100 µm.

8. A particulate, expandable styrene polymer as claimed in claim 7, which also comprises from 2 to 20% by weight, based on the styrene polymer of a phosphorus compound.

9. The use of the expandable polystyrene particles as claimed in claim 1 or 7 for producing molded polystyrene foams fulfilling the requirements of fire classifications B 1 and B 2.

## Revendications

1. Procédé de fabrication de particules de polymères de styrène expansibles, à partir de styrène, éventuellement avec des comonomères, en solution aqueuse et avec addition d'agents porogènes, avant, pendant ou après la polymérisation, **caractérisé en ce que** la polymérisation est entreprise en présence de 5 à 50% en poids, par rapport aux monomères, de graphite expansible.

2. Procédé selon la revendication 1, **caractérisé en ce que**, lors de la polymérisation, on ajoute en outre 2 à 20% en poids, par rapport aux monomères, d'un composé de phosphore.

3. Procédé selon la revendication 2, **caractérisé en ce que** le composé de phosphore est du phosphore rouge, un phosphate ou un phosphite organique ou inorganique ou un phosphonate.

4. Procédé selon la revendication 2, **caractérisé en ce que** le composé de phosphore est du phosphate de triphényle, du phosphate de diphénylcrésyle, du polyphosphate d'ammonium, du phosphate de mélamine, du diméthylester d'acide phénylphosphonique ou du phosphate de diphényle.

5. Procédé selon la revendication 1, **caractérisé en ce que** le graphite expansé présente une masse volumique de 1,5 à 2,1 g/cm³ et une taille moyenne de particules (diamètre le plus long) de 20 à 2000 µm.

6. Procédé selon la revendication 5, **caractérisé en ce que** la taille moyenne de particules est de 20 à 100 µm.

7. Polymères de styrène particulaires expansibles, contenant de 5 à 50% en poids, par rapport au polymère de styrène, de graphite expansé en tant qu'agent d'ignifugation, en une distribution homogène, **caractérisés en ce que** le graphite expansé présente une taille moyenne de particules de 20 à 100 µm.

8. Polymères de styrène particulaires expansibles selon la revendication 7, **caractérisés en ce qu'**ils contiennent en outre de 2 à 20% en poids, par rapport au polymère de styrène, d'un composé de phosphore.

9. Utilisation des particules de polystyrène expansibles selon la revendication 1 ou 7 pour la fabrication de mousses de polystyrène particulaires, satisfaisant aux classes de feu B1 et B2.
